# EUROPÄISCHE PATENTSCHRIFT

(11) **EP 1 461 676 B1**
(45) Veröffentlichungstag und Bekanntmachung des Hinweises auf die Patenterteilung: **16.10.2013**
(21) Anmeldenummer: 02795030.2
(22) Anmeldetag: 23.12.2002
(51) Int. Cl.: G06F 1/00

(54) **VERFAHREN ZUR LIZENZIERUNG VON SOFTWAREPROGRAMMEN**
METHOD FOR LICENSING SOFTWARE PROGRAMS
PROCEDE DE CONCESSION DE LICENCE POUR DES PROGRAMMES LOGICIELS

(30) Priorität: 04.01.2002 DE 10200184
(43) Veröffentlichungstag der Anmeldung: 29.09.2004
(73) Patentinhaber: Siemens Aktiengesellschaft, 80333 München (DE)
(72) Erfinder: CHAHROURI, Najib, 76187 Karlsruhe (DE); METRICH, Frederic, F-67200 Strassburg (FR)
(86) Internationale Anmeldenummer: PCT/DE2002/004709
(87) Internationale Veröffentlichungsnummer: WO 2003/060726

(56) Entgegenhaltungen:
- WO-A-02/01335
- WO-A-98/04974
- US-A1- 2001 011 238

## Beschreibung

Die Erfindung betrifft ein Verfahren zur Lizenzierung mindestens zweier Softwareprogramme gemäß dem Oberbegriff des Anspruchs 1.

Ein derartiges Verfahren ist allgemein bekannt, z. B. auch aus der WO 98/04974 A. Die heute z. B. in der Büroautomatisierung verwendeten so genannten Personalcomputer sind sinnvoll nur zusammen mit einem darauf ablaufenden Softwareprogramm, z. B. einer Textverarbeitung, einsetzbar. Solche Softwareprogramme sind gegen unberechtigte Verwendung häufig durch einen Softwareschutz gesichert. Der Softwareschutz wird durch Eingabe einer für den rechtmäßigen Benutzer und das jeweilige Softwareprogramm eindeutigen Kennung, im Folgenden kurz als Schlüssel bezeichnet, deaktiviert. Solange der Softwareschutz nicht deaktiviert ist, kann das Softwareprogramm nicht oder nicht in vollem Umfang auf dem jeweiligen Gerät genutzt werden. Das Deaktivieren des Softwareschutzes entspricht damit einer Lizenzierung des jeweiligen Softwareprogrammes.

Aus der WO 02/01335 A und der US 2001/011238 A1 sind Verfahren bekannt, bei denen einzelne Dateien mit einem speziellen Softwareprogramm nur dann geöffnet und damit genutzt werden können, wenn eine entsprechende Freischaltung des Softwareprogramms erfolgt ist. Die Dateien werden dabei zugleich so gesichert, dass eine Verwendung durch einen anderen Benutzer und/oder in einem anderen, nicht von dem Benutzer freigeschalteten Softwareprogramm nicht möglich ist. Diese Verfahren sollen daher verhindern, dass Dateien unberechtigt verteilt und genutzt werden können.

Nachteilig bei diesem bekannten Verfahren ist jedoch, dass der Benutzer die Lizenzierung manuell ausführen muss und dass insbesondere zur Lizenzierung einer Mehrzahl von Softwareprogrammen jedes Softwareprogramm einzeln lizenziert werden muss. Die einzelnen Schritte zur Lizenzierung sind dabei häufig für jedes Softwareprogramm unterschiedlich. Zudem ist für jedes zu lizenzierende Softwareprogramm ein eigener Schlüssel vorgesehen. Ein Benutzer, der ein erstes Softwareprogramm erfolgreich lizenziert hat, muss zur Lizenzierung eines weiteren Softwareprogramms den jeweiligen Schlüssel bereithalten, ermitteln, welche Schritte zur Lizenzierung auszuführen sind, und darauf diese Schritte einzeln ausführen, um das Softwareprogramm mit dem zugehörigen Schlüssel zu lizenzieren. Dieses Vorgehen ist insbesondere für ungeübte Benutzer aufwendig und fehleranfällig.

Der Erfindung liegt daher die Aufgabe zugrunde, ein Verfahren anzugeben, das zur Lizenzierung mindestens zweier Softwareprogramme, insbesondere zur gemeinsamen Lizenzierung einer Mehrzahl von Softwareprogrammen, geeignet ist, wobei jedes Softwareprogramm durch einen Softwareschutz gesichert ist und wobei jeder Softwareschutz jeweils durch einen Schlüssel deaktivierbar ist, bei dem die oben genannten Nachteile vermieden werden.

Diese Aufgabe wird erfindungsgemäß mit den Merkmalen des Anspruchs 1 gelöst. Dazu ist als weiteres Softwareprogramm ein Lizenzmanager vorgesehen. Der Lizenzmanager hat Zugriff auf jeden zur Lizenzierung eines Softwareprogramms erforderlichen Schlüssel. Der Lizenzmanager ist selbst durch einen eigenen Schlüssel, im Folgenden als Managerschlüssel bezeichnet, lizenzierbar. Mit einer Lizenzierung des Lizenzmanagers durch diesen Managerschlüssel wird durch den Lizenzmanager der oder jeder Softwareschutz durch den jeweils zugehörigen Schlüssel deaktiviert.

Die Erfindung geht dabei von der Erkenntnis aus, dass eine Vielzahl von Softwareprogrammen heute durch eine Softwaresteuerung bedienbar ist. Beispiele für derartige Softwaresteuerungen sind so genannte Makros oder so genannte Skripts. Des Weiteren ist auch denkbar, über vorgesehene Softwareschnittstellen des Softwareprogramms einzelne Funktionalitäten des Softwareprogramms, etwa solche zu dessen Lizenzierung, direkt aufzurufen. Ein solcher direkter Aufruf einer speziellen Funktionalität erfordert eine geeignete Softwarearchitektur, die sich insbesondere durch konsequente Anwendung der so genannten objektorientierten Programmierung leicht erreichen lässt.

Der Vorteil der Erfindung besteht darin, dass durch eine Automatisierung des Lizenzierungsvorgangs der Benutzer von ungewohnten und damit zeitaufwendigen und fehleranfälligen Bedienvorgängen entlastet wird. Zudem kann die Lizenzierung einer Mehrzahl von Softwareprogrammen zusammengefasst werden.

Die abhängigen Ansprüche sind auf bevorzugte Ausführungsformen der vorliegenden Erfindung gerichtet.

Der Lizenzmanager greift zur Deaktivierung jeweils eines Softwareschutzes auf in einer Datenbasis gespeicherte Anweisungsfolgen mit jeweils mindestens einer Anweisung zu, so dass eine flexible Anpassung des Lizenzmanagers an einen ggf. jeweils unterschiedlichen Softwareschutz verschiedenster Softwareprogramme möglich ist. Zur Deaktivierung des Softwareschutzes eines ersten Softwareprogramms oder einer ersten Art von Softwareprogrammen ist in der Datenbasis dann eine zugehörige erste Anweisungsfolge enthalten. Entsprechend umfasst die Datenbasis weitere Anweisungsfolgen zur Deaktivierung des Softwareschutzes eines zweiten oder dritten Softwareprogramms oder einer zweiten oder dritten Art von Softwareprogrammen, usw.

Vorteilhaft ist dabei die oder jede Anweisung eine Anweisung einer so genannten Skriptsprache oder einer so genannten Makrosprache. Anweisungen in einer Skript- oder Makrosprache sind häufig auch in einer für wenig geübte Anwender verständlichen Syntax gehalten, so dass auch manuelle Eingriffe in die Anweisungsfolgen für evtl. Anpassungen möglich sind. Zudem sind Anweisungen in einer Skript- oder Makrosprache üblicherweise im so genannten ASCII-Code abgespeichert und damit ohne weitere Umsetzungsvorgänge darstellbar und editierbar. Dies erleichtert nicht zuletzt deren Transfer, so dass die Anweisungsfolgen für den Lizenzmanager z. B. auch über das so genannte Internet angepasst oder ergänzt werden können.

Vorteilhaft ist der Lizenzmanager zusätzlich oder alternativ zur Aufnahme mindestens eines austauschbaren Lizenzierungsmoduls vorgesehen. Zur Ausführung des Verfahrens sind dann in den Lizenzmanager nach Art und Anzahl solche Lizenzierungsmodule integriert, die zur Deaktivierung eines jeden Softwareschutzes erforderlich sind. Jedes Lizenzierungsmodul umfasst entweder selbst die geeigneten Anweisungsfolgen zur Deaktivierung jeweils zumindest eines Softwareschutzes oder es greift gemäß einer weiteren vorteilhaften Ausgestaltung direkt auf in einer Datenbasis gespeicherte Anweisungsfolgen mit jeweils mindestens einer Anweisung zu.

Nachfolgend wird ein Ausführungsbeispiel der Erfindung anhand der Zeichnung näher erläutert. Einander entsprechende Gegenstände oder Elemente sind in allen Figuren mit gleichen Bezugszeichen versehen.

Darin zeigen:
- FIG 1: eine Anzahl untereinander kommunikativ verbundener elektrischer Geräte, auf denen jeweils ein Softwareprogramm vorgehalten wird,
- FIG 2a, 2b: ein Softwareprogramm bzw. einen Lizenzmanager, die jeweils durch einen Softwareschutz gesichert sind,
- FIG 3: den Softwareschutz,
- FIG 4: eine Datenbasis, auf die der Lizenzmanager zugreift, und
- FIG 5: eine Ausgestaltung des Lizenzmanagers mit austauschbaren Lizenzierungsmodulen.

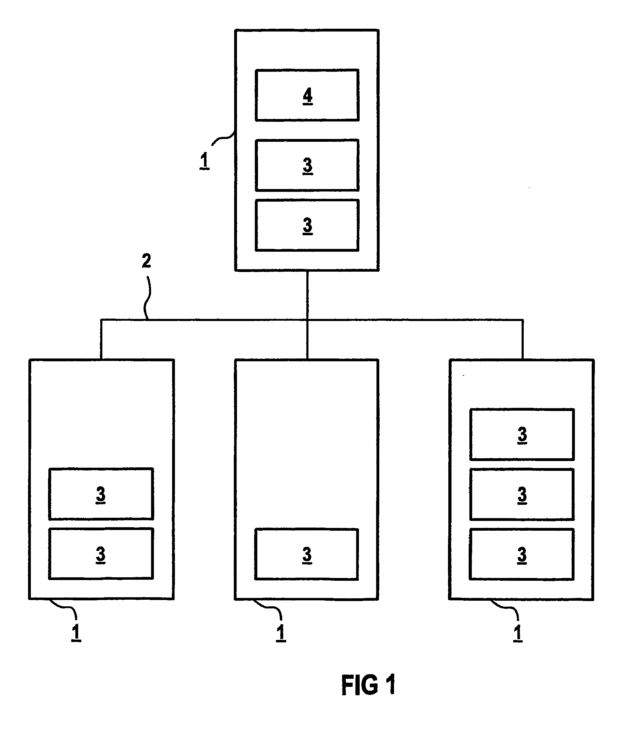

FIG 1 zeigt eine Anzahl elektrischer Geräte 1, die untereinander kommunikativ verbunden sind. Dazu ist jedes elektrische Gerät 1 an einen Bus 2 angeschlossen, der jedes elektrische Gerät 1 mit allen anderen elektrischen Geräten 1 verbindet.

Auf jedem elektrischen Gerät 1 wird jeweils zumindest ein Softwareprogramm 3 vorgehalten. Das oder jedes Softwareprogramm 3 ist dabei auf dem jeweiligen elektrischen Gerät 1 in an sich bekannter Weise z. B. in einem so genannten nichtflüchtigen Speicher (nicht dargestellt), wie z. B. einer Diskette, einer Festplatte oder ähnlichem, oder einem so genannten flüchtigen Speicher (gleichfalls nicht dargestellt), wie z. B. dem so genannten Hauptspeicher, gespeichert.

Auf einem der elektrischen Geräte 1 ist ein weiteres Softwareprogramm 4 als Lizenzmanager 4 vorgesehen. Der Lizenzmanager 4 dient zur Lizenzierung einzelner oder aller Softwareprogramme 3. Die Lizenzierung ist unabhängig davon, ob dieses oder diese auf dem gleichen elektrischen Gerät 1, auf dem auch der Lizenzmanager 4 selbst gespeichert ist, oder einem entfernten elektrischen Gerät 1 vorgehalten wird oder werden.

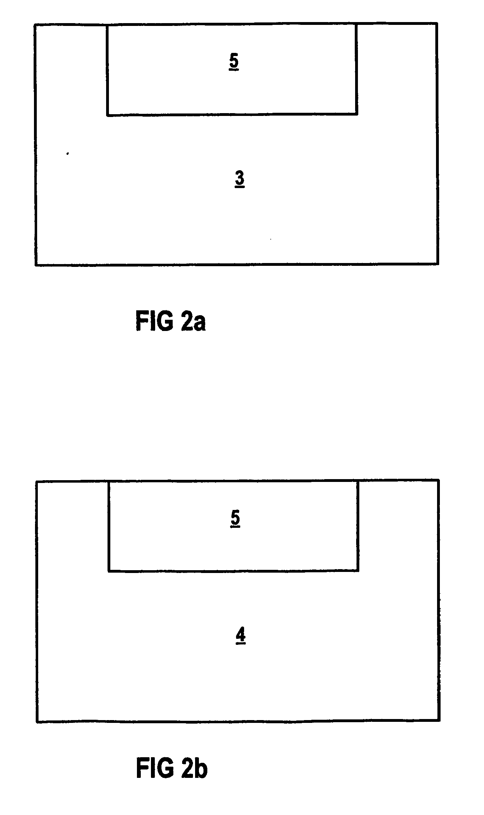

FIG 2a, 2b zeigt ein Softwareprogramm 3 bzw. den Lizenzmanager 4 mit dem sie jeweils sichernden Softwareschutz 5.

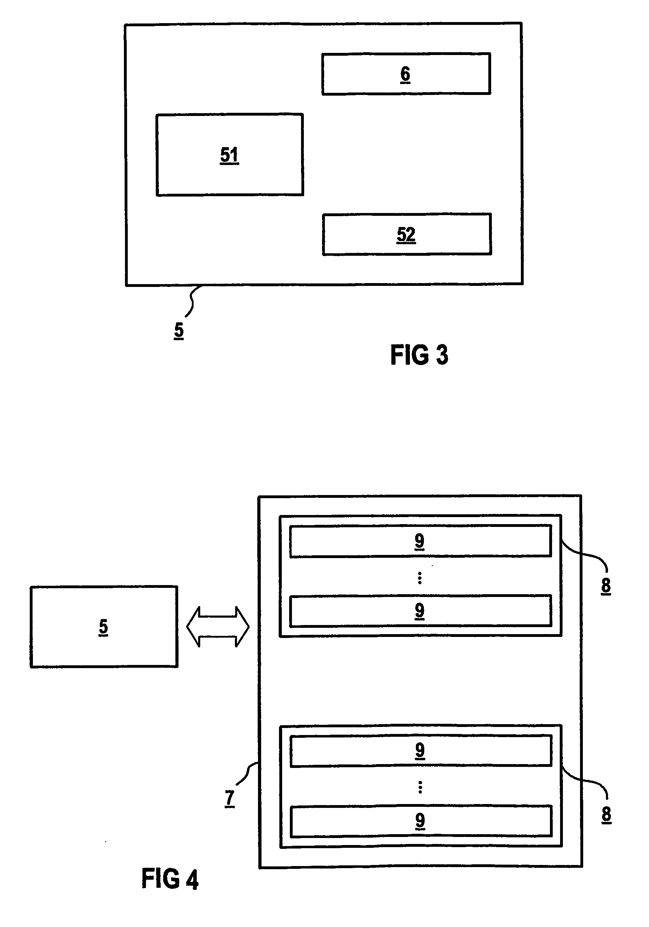

FIG 3 zeigt den Softwareschutz 5 zur Verdeutlichung von dessen grundsätzlicher Funktion. Danach vergleicht ein Vergleicher 51 eine gespeicherte Kennung 52 mit einem vorgebbaren Schlüssel 6. Der Schlüssel 6 wird entsprechend bereits bekannter Verfahren bisher durch einen Benutzer eingegeben oder auch durch das Softwareprogramm 3 von einem durch den Benutzer bereitzustellenden Speichermedium (etwa einer Diskette oder einem so genannten Dongle) eingelesen. Wenn die Kennung 52 und der Schlüssel 6 zueinander passen, insbesondere wenn Kennung 52 und Schlüssel 6 übereinstimmen, gilt das jeweilige Softwareprogramm als ordnungsgemäß lizenziert und der Softwareschutz 5 wird deaktiviert. Deaktivierung des Softwareschutzes 5 meint im Zusammenhang mit der vorliegenden Beschreibung, dass das Softwareprogramm zumindest für eine vorgegebene Anzahl von Aufrufen oder eine vorgegebene Zeitspanne betriebsfähig wird, ohne dass der Schlüssel 6 erneut eingegeben werden muss. Die Deaktivierung des Softwareschutzes 5 kann allerdings je nach Ausgestaltung des zugrunde liegenden Algorithmus z. B. stufenweise erfolgen. Danach würde ein erster, zur Kennung 52 passender Schlüssel 6 zur Deaktivierung des Softwareschutzes 5 für eine erste Gruppe oder Kategorie von Funktionen des Softwareprogramms 3 führen. Ein zweiter, zur Kennung 52 passender Schlüssel 6 würde entsprechend zur Deaktivierung des Softwareschutzes 5 für eine insbesondere zusätzliche, zweite Gruppe oder Kategorie von Funktionen des Softwareprogramms 3 führen, usw. Alternativ würde ein erster, zur Kennung 52 passender Schlüssel 6 zur Deaktivierung des Softwareschutzes 5 für eine erste Zeitspanne führen. Ein zweiter, zur Kennung 52 passender Schlüssel 6 würde entsprechend zur Deaktivierung des Softwareschutzes 5 für eine insbesondere zusätzliche, zweite Zeitspanne führen, usw.

Zur Lizenzierung eines Softwareprogramms 3 ist ein jeweils zugehöriger Schlüssel 6 vorgesehen. Die Eingabe des Schlüssels 6 deaktiviert den Softwareschutz 5 für dieses Softwareprogramm 3. Zur Lizenzierung des Lizenzmanagers 4 ist ein eigener Managerschlüssel 6 vorgesehen. Mit der Lizenzierung des Lizenzmanagers 4 durch den Managerschlüssel 6 wird der oder jeder Softwareschutz 5 eines jeden Softwareprogramms 3 durch den jeweils zugehörigen Schlüssel deaktiviert.

FIG 4 zeigt eine Datenbasis 7, auf die der Lizenzmanager 4 zugreift. In der Datenbasis 7 ist zumindest eine Anweisungsfolge 8 gespeichert. Jede Anweisungsfolge 8 umfasst zumindest eine Anweisung 9. Der Lizenzmanager 4 entnimmt der Datenbasis 7 je nach zu deaktivierendem Softwareschutz 5 eine geeignete Anweisungsfolge 8 oder sukzessive deren Anweisungen 9 und führt dies aus. Die oder jede Anweisung 9 ist dabei z. B. eine Anweisung einer so genannten Skriptsprache oder eine Anweisung 9 einer so genannten Makrosprache. Auf diese Weise kann der Lizenzmanager 4 den Softwareschutz 5 verschiedenster Softwareprogramme 3 deaktivieren. Die dazu jeweils erforderlichen Schlüssel 6 entnimmt der Lizenzmanager 4 entweder ebenfalls der Datenbasis 7 oder die Schlüssel 6 werden dem Lizenzmanager durch eine manuelle Eingabe übergeben. Welches Softwareprogramm 3 mit welchem Schlüssel 6 und welcher Anweisungsfolge 8 zu lizenzieren ist, erkennt der Lizenzmanager 4 entweder an dem Schlüssel 6 selbst oder an mit dem Schlüssel verknüpften, insbesondere manuell eingegebenen, zusätzlichen Kriterien.

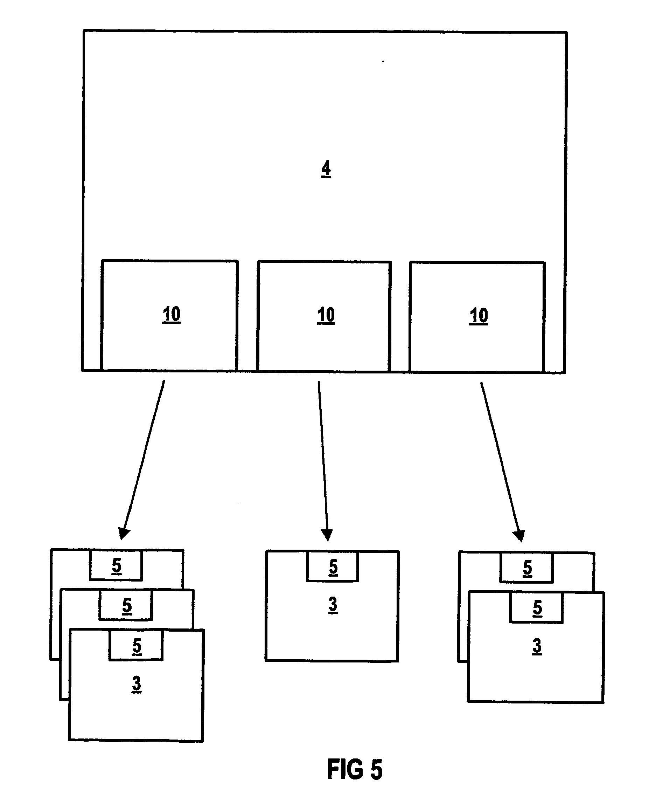

FIG 5 zeigt eine spezielle oder alternative Ausgestaltung des Lizenzmanagers 4. Danach ist der Lizenzmanager 4 zur Aufnahme mindestens eines austauschbaren Lizenzierungsmoduls 10 vorgesehen. Jedes Lizenzierungsmodul 10 ist zur Deaktivierung des Softwareschutzes 5 mindestens eines Softwareprogramms 3 bestimmt und geeignet (angedeutet durch die Pfeile). Bei mehreren Softwareprogrammen, die in der Art und Weise der Deaktivierung ihres jeweiligen Softwareschutzes 5 übereinstimmen oder ausreichend ähnlich sind, kann ein einziges Lizenzierungsmodul 10 zu deren Lizenzierung vorgesehen sein. In den Lizenzmanager 4 werden nach Art und Anzahl solche Lizenzierungsmodule 10 integriert, die zur Deaktivierung des Softwareschutzes 5 eines jeden durch das oder jedes Gerät 1 ausgeführten Softwareprogramms 3 erforderlich sind.

Das oder jedes Lizenzierungsmodul 10 greift, sofern entsprechende Informationen nicht bereits im Lizenzierungsmodul 10 selbst enthalten sind, zur Deaktivierung jeweils eines Softwareschutzes 5 z. B. auf in einer Datenbasis 7 (vgl. FIG 4) gespeicherte Anweisungsfolgen 8 mit jeweils mindestens einer Anweisung 9 zu. Solche Anweisungsfolgen 8 oder deren funktionales Äquivalent können auch direkt im jeweiligen Lizenzierungsmodul 10 enthalten sein.

Damit lässt sich die Erfindung kurz wie folgt darstellen:

Es wird ein Verfahren angegeben, das zur insbesondere gemeinsamen Lizenzierung einer Mehrzahl durch einen Softwareschutz 5 gesicherter Softwareprogramme 3 verwendbar ist. Jeder Softwareschutz 5 ist dabei jeweils durch einen Schlüssel 6 deaktivierbar. Auf den oder jeden Schlüssel 6 hat ein Lizenzmanager 4 Zugriff. Der Lizenzmanager 4 selbst ist durch einen eigenen Managerschlüssel 6 lizenzierbar. Mit einer Lizenzierung des Lizenzmanagers 4 durch den Managerschlüssel 6 wird der oder jeder Softwareschutz 5 mittels des Lizenzmanagers 4 durch den jeweils zugehörigen Schlüssel 6 deaktiviert.

## Patentansprüche

1. Verfahren zur Lizenzierung mindestens zweier durch jeweils einen Softwareschutz (5) gesicherter Softwareprogramme (3),
wobei jeder Softwareschutz (5) jeweils durch einen Schlüssel (6) deaktivierbar ist,
wobei ein weiteres Softwareprogramm (4) als Lizenzmanager (4) vorgesehen ist, welches auf den oder jeden Schlüssel (6) Zugriff hat,
wobei der Lizenzmanager (4) durch einen Managerschlüssel (6) lizenzierbar ist,
wobei mit einer Lizenzierung des Lizenzmanagers (4) durch den Managerschlüssel (6) jeder Softwareschutz (5) durch den jeweils zugehörigen Schlüssel (6) deaktiviert wird und
wobei der Lizenzmanager (4) zur Deaktivierung jeweils eines Softwareschutzes (5) auf in einer Datenbasis (7) gespeicherte Anweisungsfolgen (8) mit jeweils mindestens einer Anweisung (9) zugreift.

2. Verfahren nach Anspruch 1, wobei die oder jede Anweisung (9) eine Anweisung einer Skriptsprache ist.

3. Verfahren nach Anspruch 1, wobei die oder jede Anweisung (9) eine Anweisung einer Makrosprache ist.

4. Verfahren nach einem der obigen Ansprüche, wobei der Lizenzmanager (4) zur Aufnahme mindestens eines austauschbaren Lizenzierungsmoduls (10) vorgesehen ist und wobei in den Lizenzmanager (4) nach Art und Anzahl solche Lizenzierungsmodule (10) integriert werden, die zur Deaktivierung eines jeden Softwareschutzes (5) erforderlich sind.

5. Verfahren nach Anspruch 4, wobei das oder jedes Lizenzierungsmodul (10) zur Deaktivierung jeweils eines Softwareschutzes (5) auf in einer Datenbasis (7) gespeicherte Anweisungsfolgen (8) mit jeweils mindestens einer Anweisung (9) zugreift.

## Claims

1. Method for licensing at least two software programs (3) protected by a respective software protection means (5),
every software protection means (5) each being able to be deactivated by means of a key (6),
a further software program (4) being provided as a licence manager (4) having access to the or every key (6),
the licence manager (4) being able to be licensed by means of a manager key (6),
every software protection means (5) being deactivated by the respectively associated key (6) when the licence manager (4) is licensed by means of the manager key (6), and
the licence manager (4) accessing instruction sequences (8) which are stored in a database (7) and each have at least one instruction (9) in order to deactivate a respective software protection means (5).

2. Method according to Claim 1, the or every instruction (9) being an instruction of a script language.

3. Method according to Claim 1, the or every instruction (9) being an instruction of a macro language.

4. Method according to one of the preceding claims, the licence manager (4) being intended to receive at least one exchangeable licensing module (10), and those licensing modules (10) which are needed to deactivate every software protection means (5) being integrated, by type and number, in the licence manager (4).

5. Method according to Claim 4, the or every licensing module (10) accessing instruction sequences (8) which are stored in a database (7) and each have at least one instruction (9) in order to deactivate a respective software protection means (5).

## Revendications

1. Procédé de concession de licence d'au moins deux programmes ( 3 ) logiciels sécurisés respectivement par une protection ( 5 ) de logiciel,
dans lequel chaque protection ( 5 ) de logiciel peut être désactivée respectivement par une clef ( 6 ),
dans lequel il est prévu, comme gestionnaire ( 4 ) de licence, un autre programme ( 4 ) de logiciel, qui a accès à la clef ( 6 ) ou à chaque clef ( 6 ),
dans lequel le gestionnaire ( 4 ) de licence peut être licencié par une clef ( 6 ) de gestionnaire,
dans lequel par une concession de licence du gestionnaire ( 4 ) de licence par la clef ( 6 ) de gestionnaire, chaque protection ( 5 ) de logiciel est désactivée par la clef ( 6 ) associée respectivement et
dans lequel le gestionnaire ( 4 ) de licence accède, pour la désactivation de respectivement une protection ( 5 ) de logiciel, à une suite ( 8 ) d'instructions mémorisées dans une base ( 7 ) de données et ayant respectivement au moins une instruction ( 9 ).

2. Procédé suivant la revendication 1, dans lequel l'instruction ( 9 ) ou chaque instruction ( 9 ) est une inscription d'un langage de script.

3. Procédé suivant la revendication 1, dans lequel l'instruction ( 9 ) ou chaque instruction ( 9 ) est une instruction d'un macrolangage.

4. Procédé suivant l'une des revendications précédentes, dans lequel le gestionnaire ( 4 ) de licence est prévu pour la réception d'au moins un module ( 10 ) remplaçable de concession de licence et dans lequel il est intégré dans le gestionnaire ( 4 ) de licence, suivant le type et le nombre, les modules ( 10 ) de concession de licence, qui sont nécessaires pour l'activation de chaque protection ( 5 ) de logiciel.

5. Procédé suivant la revendication 4, dans lequel le module ( 10 ) de concession de licence ou chaque module ( 10 ) de concession de licence accède, pour la désactivation de respectivement une protection ( 5 ) de logiciel, à une séquence ( 8 ) d'instructions mémorisées dans une base ( 7 ) de données et ayant respectivement au moins une instruction ( 9 ).
